# EUROPEAN PATENT APPLICATION

(11) **EP 4 546 514 A1**
(43) Date of publication of application: **30.04.2025**
(21) Application number: 23887802.9
(22) Date of filing: 27.10.2023
(51) Int. Cl.: H01M 50/102

(54) **BATTERY CELL, BATTERY, AND ELECTRICAL APPARATUS**

(30) Priority: 07.11.2022 WO PCT/CN2022/130408
(71) Applicant: Contemporary Amperex Technology (Hong Kong) Limited, Hong Kong (HK)
(72) Inventor: SU, Huasheng, Ningde, Fujian 352100 (CN); ZHENG, Yulian, Ningde, Fujian 352100 (CN); HUANG, Shoujun, Ningde, Fujian 352100 (CN); CHEN, Xinxiang, Ningde, Fujian 352100 (CN); WANG, Peng, Ningde, Fujian 352100 (CN); JIN, Haizu, Ningde, Fujian 352100 (CN); WU, Ningsheng, Ningde, Fujian 352100 (CN)
(74) Representative: Ran, Handong
(86) International application number: PCT/CN2023/127317
(87) International publication number: WO 2024/099112

(57) **Abstract**

The present application provides a battery cell, a battery, and an electrical apparatus. The battery cell comprises a housing and an electrode assembly accommodated in the housing. The housing comprises a first plate and a second plate. The second plate intersects the first plate. The first plate comprises a first inner wall surface facing the electrode assembly, and the second plate comprises a second inner wall surface facing the electrode assembly. The housing comprises a third inner wall surface connecting the first inner wall surface and the second inner wall surface. At least part of the third inner wall surface defines a first relief groove. In the thickness direction of the first plate, the first relief groove is recessed towards the side away from the electrode assembly relative to the first inner wall surface, and a part of the projection of the electrode assembly on the first plate overlaps the first relief groove.

## Description

### CROSS-REFERENCE TO RELATED APPLICATIONS

The present application claims priority to International Patent Application No. PCT/CN2022/130408, filed on November 7, 2022 and entitled "HOUSING, BATTERY CELL, BATTERY, AND ELECTRICAL DEVICE", which is incorporated herein by reference in its entirety.

### TECHNICAL FIELD

The present application relates to the field of batteries, and more specifically, to a battery cell, a battery, and an electrical device.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool.

In the development of battery technologies, how to improve reliability of the battery cell is a research direction in the battery technologies.

### SUMMARY

The present application provides a battery cell, a battery, and an electrical device, and therefore, reliability can be improved.

According to a first aspect, an embodiment of the present application provides a battery cell, and the battery cell includes a shell and an electrode assembly accommodated in the shell. The shell includes a first plate and a second plate, the second plate is intersected with the first plate for arrangement, the first plate includes a first inner wall surface facing the electrode assemblies, and the second plate includes a second inner wall surface facing the electrode assemblies. The shell includes a third inner wall surface connecting the first inner wall surface and the second inner wall surface, at least a part of the third inner wall surface defines a first avoidance groove, in a thickness direction of the first plate, the first avoidance groove is concave relative to the first inner wall surface and towards one side away from the electrode assemblies, and a part of a projection of the electrode assemblies on the first plate overlaps the first avoidance groove.

In embodiments of the present application, the first avoidance groove can avoid the electrode assemblies, so that when the battery cell is subject to external impact, a risk of squeezing the electrode assemblies by a location in which the first plate is intersected with the second plate is reduced, falling off of an active material of the electrode assembly is reduced, capacity attenuation of the battery cell slows down, and reliability of the battery cell is improved. For example, the first avoidance groove can hide an uneven area formed at the location in which the first plate is intersected with the second plate, increase a distance between the uneven area and the electrode assemblies, and reduce a risk that the uneven area squeezes the electrode assemblies.

In some embodiments, the first inner wall surface is used to support the electrode assemblies.

The first inner wall surface can support the electrode assemblies, so as to reduce a risk that a corner of the electrode assemblies falls into the first avoidance groove, increase a distance, along the thickness direction of the first plate, between the location in which the first plate is intersected with the second plate and the electrode assemblies, reduce the risk of squeezing the electrode assemblies by the location in which the first plate is intersected with the second plate, reduce the falling off of the active material of the electrode assembly, and improve the reliability of the battery cell.

In some embodiments, the electrode assembly includes a first electrode plate and a second electrode plate with opposite polarities, the first electrode plate and the second electrode plate both include a straight layer facing the second plate for arrangement, a plurality of straight layers are stacked along a first direction for arrangement, and two ends of the first avoidance groove along a second direction are both beyond the straight layers. The thickness direction of the first plate, the first direction, and the second direction are perpendicular to each other, and the first direction is parallel to a thickness direction of the second plate.

The two ends of the first avoidance groove along the second direction are both beyond the straight layer. In this way, the straight layer can be avoided as much as possible, and a minimum distance between the location in which the first plate is intersected with the second plate and a straight layer closest to the second plate is increased, so that when the battery cell is subject to the external impact, a risk of squeezing the straight layer by the location in which the first plate is intersected with the second plate is reduced, falling off of an active material of the straight layer is reduced, and the reliability of the battery cell is improved.

In some embodiments, the shell further includes third plates, and the third plate is located on one side of the electrode assembly along the second direction, and is connected to the first plate and the second plate. In the second direction, the first avoidance groove is spaced apart from the third plate.

A junction of the first plate, the second plate, and the third plate is spaced apart from the first avoidance groove by a specific distance along the second direction, so that a risk that the first avoidance groove extends to the junction of the three plates is reduced, stress concentration at the junction of the three plates is reduced, and strength and reliability of the shell are improved.

In some embodiments, the first electrode plate and the second electrode plate are wound for arrangement, the electrode assembly includes a straight area and a bending area, the bending area is connected to end portions of the straight area along the second direction, and the plurality of straight layers are located in the straight area.

In some embodiments, the shell further includes third plates, and the third plate is located on one side of the electrode assembly along the second direction, and is connected to the first plate and the second plate. The third plate further includes a fourth inner wall surface facing the electrode assemblies. The shell further includes a fifth inner wall surface connecting the first inner wall surface and the fourth inner wall surface, at least a part of the fifth inner wall surface defines a second avoidance groove, and in the thickness direction of the first plate, the second avoidance groove is concave relative to the first inner wall surface and towards the side away from the electrode assembly. In the thickness direction of the first plate, at least a part of a projection of the bending area on the first plate overlaps the second avoidance groove.

The second avoidance groove can avoid the bending area, so that when the battery cell is subject to the external impact, a risk of squeezing the bending area at a location in which the first plate is intersected with the third plate is reduced, the falling off of the active material of the electrode assembly is reduced, the capacity attenuation of the battery cell slows down, and the reliability of the battery cell is improved.

In some embodiments, the shell includes two second plates arranged opposite to each other along the first direction and two third plates arranged opposite to each other along the second direction. A second inner wall surface of each second plate is connected to the first inner wall surface through at least one third inner wall surface, and a fourth inner wall surface of each third plate is connected to the first inner wall surface through at least one fifth inner wall surface.

By arranging the first avoidance groove and second avoidance grooves around the first plate, the electrode assemblies can still be effectively avoided when positions of the electrode assemblies are deviated, and a risk of squeezing the corner of the electrode assemblies can be reduced.

In some embodiments, the second avoidance groove is spaced apart from the second plate along the first direction. The junction of the first plate, the second plate, and the third plate is spaced apart from the second avoidance groove by a specific distance along the first direction, so that a risk that the second avoidance groove extends to the junction of the three plates is reduced, the stress concentration at the junction of the three plates is reduced, and the strength and the reliability of the shell are improved.

In some embodiments, the two ends of the first avoidance groove are respectively communicated with two second avoidance grooves. The first avoidance groove is communicated with the second avoidance grooves. This can simplify a structure of a mold and improve molding efficiency.

In some embodiments, there are a plurality of electrode assemblies, and the plurality of electrode assemblies are stacked along the first direction for arrangement. In the thickness direction of the first plate, a projection of a bending area of each electrode assembly on the first plate overlaps the second avoidance groove.

A second avoidance groove can avoid all bending areas of the plurality of electrode assemblies, so as to reduce the falling off of the active material of the electrode assembly and improve the reliability of the battery cell when the battery cell is subject to the external impact.

In some embodiments, there are a plurality of electrode assemblies, and the plurality of electrode assemblies are stacked along the first direction for arrangement. A plurality of fifth inner wall surfaces spaced apart from each other along the first direction each connect the first inner wall surface and the fourth inner wall surface, and the plurality of fifth inner wall surfaces define a plurality of second avoidance grooves. In the thickness direction of the first plate, each of the second avoidance grooves at least overlaps a projection of a bending area of one electrode assembly on the first plate.

The bending areas of the plurality of electrode assemblies are spaced apart from each other along the first direction for arrangement, so that a plurality of second avoidance grooves spaced apart from each other can be arranged to avoid the bending areas of the plurality of electrode assemblies, so that an extension length of a single second avoidance groove can be reduced, and molding difficulty of the second avoidance groove can be reduced.

In some embodiments, the electrode assembly includes a plurality of first electrode plates, the plurality of first electrode plates are stacked along the first direction for arrangement, and each first electrode plate includes a straight layer. The shell includes two first plates arranged opposite to each other along the thickness direction of the first plate and two second plates arranged opposite to each other along the first direction, and the first plate and the second plate are alternately arranged along a circumferential direction of the shell. Two ends of a first inner wall surface of each first plate in the first direction are respectively connected to second inner wall surfaces of the two second plates via two third inner wall surfaces.

The first avoidance groove can avoid a first electrode plate closest to one second plate and a first electrode plate closest to the other second plate, so that when the battery cell is subject to impact along the thickness direction of the first plate, a risk of squeezing the first electrode plate at the location in which the first plate is intersected with the second plate is reduced, the falling off of the active material is reduced, the capacity attenuation of the battery cell slows down, and the reliability of the battery cell is improved.

In some embodiments, the third inner wall surface further defines a third avoidance groove that is communicated with the first avoidance groove, and in the thickness direction of the second plate, the third avoidance groove is concave relative to the second inner wall surface and towards a side away from the electrode assemblies. In the thickness direction of the second plate, a part of a projection of the electrode assemblies on the second plate overlaps the third avoidance groove.

When the battery cell is subject to impact along the thickness direction of the second plate, the third avoidance groove can reduce a risk of squeezing the first electrode plate at the location in which the first plate is intersected with the second plate, reduce the falling off of the active material, slow down the capacity attenuation of the battery cell, and improve the reliability of the battery cell.

In some embodiments, the third inner wall surface includes a first surface and a second surface, the first surface is an arc surface and is connected to the second inner wall surface, and the second surface connects the first surface and the first inner wall surface. At least a part of the first surface and the second surface define the first avoidance groove.

By setting the arc first surface, an approximate round-angle structure can be formed at the location in which the first plate is intersected with the second plate, so as to disperse stress during a molding process, reduce the stress concentration, and improve the reliability of the shell. At least the part of the first surface hides in the first avoidance groove, so that when the battery cell is subject to the external impact, a risk of squeezing the electrode assemblies by the first surface is reduced, the falling off of the active material of the electrode assembly is reduced, the capacity attenuation of the battery cell slows down, and the reliability of the battery cell is improved.

In some embodiments, the first surface includes a first area and a second area, the first area protrudes, in the thickness direction of the first plate, from a side that is of the first inner wall surface and that faces the electrode assemblies, and is connected to the second inner wall surface, the second area connects the first area and the second surface, and the second area and the second surface define the first avoidance groove.

A separator of the electrode assembly can play the role of support and cushion to a specific extent. Therefore, even if the first surface has the first area protruding from the first inner wall surface, the separator can also separate the first area from an electrode plate of the electrode assembly to a specific extent, so as to reduce the falling off of the active material of the electrode assembly and improve the reliability of the battery cell. In the embodiments of the present application, only the second area is hided in the first avoidance groove. This can reduce a requirement on a depth of the first avoidance groove and reduce molding difficulty.

In some embodiments, the first surface is a circular arc surface, two ends of the first surface are respectively tangent to the second inner wall surface and the second surface, and a radius of the first surface is R; and in the thickness direction of the first plate, a size of an area that is of the first surface and that is in the first avoidance groove is d, where 0.1R ≤ d ≤ R.

In the embodiments of the present application, d is limited to be greater than or equal to 0.1R, so that a circular arc surface hidden in the first avoidance groove has a relatively large arc length, so as to effectively avoid the electrode assemblies, reduce the risk of squeezing the electrode assemblies by the first surface, reduce the falling off of the active material of the electrode assembly, slow down the capacity attenuation of the battery cell, and improve the reliability of the battery cell. In the embodiments of the present application, d is limited to be less than or equal to R, to limit a maximum depth of the first avoidance groove, reduce a strength loss of the shell, and improve the reliability of the battery cell.

In some embodiments, 0.3R ≤ d ≤ 0.9R. This can further improve the reliability of the battery cell.

In some embodiments, the second surface includes a third area and a fourth area that are intersected with each other for arrangement, the third area is connected to the first surface and parallel to the first inner wall surface, and the fourth area connects the third area and the first inner wall surface. By arranging the third area parallel to the first inner wall surface, stress evenness can be improved in a squeezing molding process of the first avoidance groove.

In some embodiments, in the thickness direction of the second plate, a maximum size w of the first avoidance groove is from 1 mm to 10 mm.

In the embodiments of the present application, w is limited to be greater than or equal to 1 mm, so as to provide a relatively large avoidance space, reduce the risk of squeezing the electrode assemblies by the location in which the first plate is intersected with the second plate, and improve the reliability. In the embodiments of the present application, w is limited to be less than or equal to 10 mm, so as to reduce flowing of materials, reduce the forming difficulty of the first avoidance groove, and improve evenness of the first plate in the squeezing molding process of the first avoidance groove.

In some embodiments, w is from 3 mm to 8 mm.

In some embodiments, a maximum hardness of a part that is of the shell and that corresponds to the first avoidance groove along the thickness direction of the first plate is greater than a maximum hardness of a part that is of the first plate and that corresponds to the first inner wall surface.

The part that is of the shell and that corresponds to the first avoidance groove along the thickness direction of the first plate may be referred to as a groove part for short. A minimum thickness of the groove part may be reduced due to setup of the first avoidance groove. Therefore, by increasing the maximum hardness of the groove part, a damage to structural strength caused by the setup of the first avoidance groove can be reduced, a risk that the groove part cracks is reduced, and the reliability of the battery cell is improved.

In some embodiments, the third inner wall surface is located on one side that is of a plane on which the second inner wall surface is located and that is close to the first inner wall surface.

The third inner wall surface can be formed under squeezing of an external die. After the third inner wall surface is formed, the external die can be pulled out along the thickness direction of the first plate. In the embodiments of the present application, the third inner wall surface is arranged on the side that is of the plane on which the second inner wall surface is located and that is close to the first inner wall surface, so that interference of the second inner wall surface to the external die can be reduced, and it is conducive to die pulling.

In some embodiments, the shell includes a housing and an end cap, the housing has an opening, and the end cap covers the opening; and the housing includes the first plate and the second plate.

According to a second aspect, embodiments of the present application provide a battery including a plurality of battery cells provided in any embodiment of the first aspect.

According to a third aspect, embodiments of the present application provide an electrical device including a battery provided in any embodiment of the first aspect. The battery is configured to provide electric energy.

### BRIEF DESCRIPTION OF DRAWINGS

In order to more clearly illustrate the technical solutions of the embodiments of the present application, the following will briefly introduce the drawings that are desired to be used in the embodiments of the present application. Apparently, the drawings described below are merely some embodiments of the present application, from which other drawings may be obtained by a person of ordinary skill in the art without creative work.
FIG. 1 is a schematic structural diagram of a vehicle according to some embodiments of the present application;
FIG. 2 is a schematic exploded view of a battery according to some embodiments of the present application;
FIG. 3 is a schematic exploded view of a battery cell according to some embodiments of the present application;
FIG. 4 is a schematic sectional view of a battery cell according to some embodiments of the present application;
FIG. 5 is an enlarged schematic diagram of a circle in FIG. 4;
FIG. 6 is a top-down schematic diagram of a housing of a battery cell provided in some embodiments of the present application, where a dashed line is an outline of a projection of electrode assemblies on the housing;
FIG. 7 is a schematic diagram of an electrode assembly of a battery cell provided in some embodiments of the present application;
FIG. 8 is an enlarged schematic diagram of an oblong in FIG. 6;
FIG. 9 is a partial cross-sectional view along the A-A direction in FIG. 8;
FIG. 10 is a partial cross-sectional view along the A-A direction in FIG. 8;
FIG. 11 is a top-down schematic diagram of a housing of a battery cell provided in some other embodiments of the present application, where a dashed line is an outline of a projection of electrode assemblies on the housing;
FIG. 12 is a schematic sectional view of a battery cell according to some other embodiments of the present application;
FIG. 13 is a schematic diagram of a structure of a housing of a battery cell provided in some embodiments of the present application;
FIG. 14 is an enlarged schematic diagram of a circle in FIG. 12;
FIG. 15 is a top-down schematic diagram of a housing of a battery cell provided in some other embodiments of the present application;
FIG. 16 is an enlarged schematic diagram of a circle in FIG. 15;
FIG. 17 is a partial cross-sectional view of a housing of a battery cell provided in some other embodiments of the present application;
FIG. 18 is a partial cross-sectional view of a housing of a battery cell provided in some other embodiments of the present application;
FIG. 19 is a partial cross-sectional view of a housing of a battery cell provided in some other embodiments of the present application; and
FIG. 20 is a partial cross-sectional view of a housing of a battery cell provided in some other embodiments of the present application.

**Reference numerals are as follows:**
1. Vehicle; 2. Battery; 3. Controller; 4. Motor; 5. Box; 5a. First box portion; 5b. Second box portion; 5c. Accommodation space; 6. Battery cell;
10. Electrode assembly; 11. First electrode plate; 12. Second electrode plate; 13. Separator; 14. Straight area; 15. Bending area; 10a. Straight layer;
20. Shell; 30. Housing; 40. End cap; 50. Electrode terminal; 60. Adapter piece; 70. Insulator;
31. First plate; 311. First inner wall surface;
32. Second plate; 321. Second inner wall surface;
33. Third plate; 331. Fourth inner wall surface;
34. Third inner wall surface; 341. First surface; 3411. First area; 3411a. First sub-area; 3411b. Second sub-area; 3412. Second area; 342. Second surface; 3421. Third area; 3422. Fourth area; 343. Fifth surface; 3431. Fifth area; 3432. Sixth area;
35. First avoidance groove;
36. Fifth inner wall surface; 361. Third surface; 362. Fourth surface;
37. Second avoidance groove; 381. First circular arc surface; 382. Second circular arc surface; 39. Third avoidance groove;
S1. First datum plane; S2. Second datum plane; Z. Thickness direction of the first plate; Y. First direction; X. Second direction.

### DETAILED DESCRIPTION OF EMBODIMENTS

In order to make objectives, technical solutions and advantages of embodiments of the present application clearer, the technical solutions in embodiments of this application will be clearly described below in conjunction with accompanying drawings in the embodiments of this application. Apparently, the described embodiments are merely some rather than all of the embodiments of the present application. Based on the embodiments in the present application, all other embodiments obtained by a person of ordinary skill in the art without making any creative efforts shall fall within the protection scope of the present application.

Unless otherwise defined, all technical and scientific terms used herein have the same meanings as what is normally understood by a person skilled in the technical field of the present application. The terms used in the specification of the present application are merely intended to describe specific embodiments but not intended to limit the present application. The terms "include" and "contain" and any variations thereof used in the specification, claims, and brief description of drawings of the present application are intended as non-exclusive inclusion. The terms "include" and "contain" and any variations thereof used in the specification, claims, and brief description of drawings of the present application are intended to cover a non-exclusive inclusion. The terms "first", "second", etc. in the specification and claims of the present application or in the preceding drawings are used to distinguish between different objects, not to describe a specific sequence or order of precedence.

Reference to "embodiment(s)" in the present application means that specific features, structures or characteristics described with reference to the embodiment(s) may be included in at least one embodiment of the present application. Reference to this term in different places in the specification does not necessarily represent the same embodiment, nor does it represent an independent or alternative embodiment in a mutually exclusive relationship with other embodiments.

In the description of the present application, it is hereby noted that, unless otherwise expressly specified and limited, terms "mount", "connected", "connect", "attach" and the like are to be understood in a broad sense, for example, it may be a fixed connection, or a detachable connection, or an integral connection; and it may be a direct connection or indirect connection through an intermediate medium, and may be the interior communication between two elements. For a person of ordinary skill in the art, the specific meaning of the forgoing terms in the present application may be understood according to specific circumstances.

The term "and/or" in the present application indicates merely a relation for describing the related objects, and represents three possible relationships. For example, A and/or B may represent the following three circumstances: A alone, both A and B, and B alone. In addition, the character "/" in the present application generally indicates an "or" relationship between the front and back related objects.

In embodiments of the present application, the same reference numeral denotes the same component. For brevity, detailed descriptions of the same component are omitted in a different embodiment. Understandably, dimensions such as thickness, length, and width of various components in some embodiments of the present application shown in the drawings, and dimensions such as overall thickness, length, and width of an integrated device are merely illustrative descriptions, but do not constitute any limitation on the present application.

"A plurality of" referred to in the present application means two or more (including two).

In an embodiment of the present application, a battery cell may be a secondary battery. The secondary battery is a battery cell that is reusable through activation of an active material in the battery cell by charging the battery cell that is discharged.

The battery cell may include, but is not limited to, a lithium-ion battery cell, a sodium-ion battery cell, a sodium-lithium-ion battery cell, a lithium-metal battery cell, a sodium-metal battery cell, a lithium-sulfur battery cell, a magnesium-ion battery cell, a nickel-metal hydride battery cell, a nickel-cadmium battery cell, a lead battery cell, and the like.

In an example, a battery cell can be a cylindrical battery cell, a prismatic battery cell, or a battery cell of another shape. The prismatic battery cell includes a square-shell battery cell, a blade-shaped battery cell, or a polygonal prism battery. The polygonal prism battery is, for example, a hexagonal prism battery. This is not particularly limited in the present application.

The battery mentioned in embodiments of the present application means a stand-alone physical module that includes one or more battery cells to provide a higher voltage and a higher capacity.

In some embodiments, the battery may be a battery module. When there are a plurality of battery cells, the plurality of battery cells are arranged and fixed to form a battery module.

In some embodiments, the battery may be a battery pack. The battery pack includes a box and a battery cell. The battery cell or battery module is accommodated in the box.

In some embodiments, the box may serve as a part of a chassis structure of a vehicle. For example, a part of the box may become at least a part of a floor panel of the vehicle, or, a part of the box may become at least a part of a crossbeam and a vertical beam of the vehicle.

In some embodiments, the battery may be an energy storage device. Energy storage devices include an energy storage container, an energy storage cabinet, and the like.

The battery cell generally includes an electrode assembly and a shell, and the electrode assembly is accommodated in the shell. The electrode assembly includes a positive electrode, a negative electrode, and a separator. During a charging/discharging process of the battery cell, active ions (such as lithium ions) are intercalated and deintercalated back and forth between the positive and negative electrodes. The separator is disposed between the positive and negative electrodes, which reduces a risk of a short circuit between the positive and negative electrodes and allows the active ions to pass through.

The shell is used to package components such as the electrode assembly and an electrolyte. The shell can be a steel shell, an aluminum shell, a plastic shell (such as polypropylene), a composite metal shell (such as a copper-aluminum composite shell), or the like.

In a forming process of the shell, a location in which two plates of the shell are intersected with each other may be uneven due to flowing of materials. When the battery cell is subject to external impact, the location in which the two plates are intersected with each other is prone to squeeze the electrode assembly, resulting in a risk that an active material of the electrode assembly falls off, and causing a reliability problem.

In some embodiments, a supporting plate is usually arranged in the shell, and the supporting plate can support the electrode assembly to increase a distance between the electrode assembly and the location in which the two plates are intersected with each other, and reduce the risk that the electrode assembly is squeezed. However, the supporting plate not only occupies an internal space of the shell, and reduces a density of the battery cell, but also causes an assembly process of the battery cell to be complicated. This affects production costs of the battery cell.

In view of this, a technical solution is provided in the embodiments of the present application. An avoidance groove is disposed at a location in which two plates of a shell are intersected with each other. This increases a distance between an uneven area of the shell and an electrode assembly, reduces a risk in which the shell squeezes the electrode assembly, reduces falling off of an active material of the electrode assembly, slows down capacity attenuation of a battery cell, and improves reliability of the battery cell. In addition, in the technical solution of the present application, a supporting plate can also be omitted. This reduces a quantity of components of the battery cell, simplify a structure of the battery cell, and improve energy density of the battery cell.

The battery cell described in the embodiments of the present application is applicable to a battery and an electrical device using the battery.

The battery cell, the battery, and the electrical device disclosed in the embodiments of the present application may be used in various energy storage systems that use a battery as a power source or a battery as an energy storage element. The electrical device may be, but is not limited to, a mobile phone, a tablet, a laptop computer, an electric toy, a power tool, an electric scooter, an electric car, a ship, a spacecraft, and the like. The electric toy can include a stationary or mobile electric toy, for example, a game console, an electric vehicle toy, an electric ship toy, and an electric aircraft toy. The spacecraft can include an airplane, a rocket, a space shuttle, a spaceship, and the like.

For ease of description in the following embodiments, a vehicle is used as an example of the electrical device.

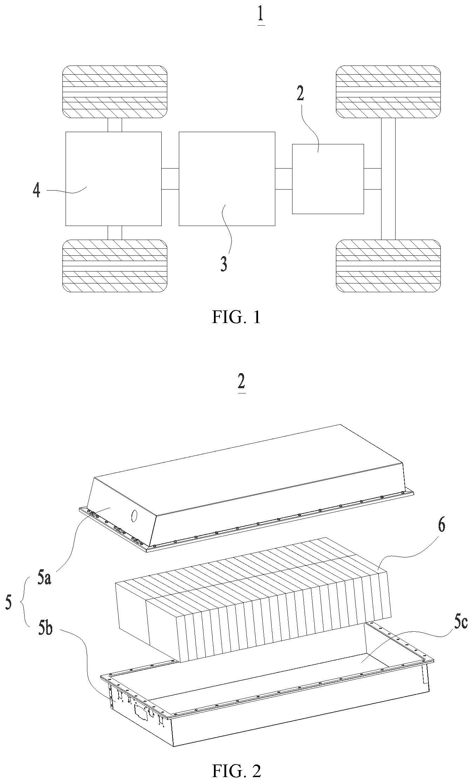

FIG. 1 is a schematic structural diagram of a vehicle according to some embodiments of the present application.

As shown in FIG. 1, the vehicle 1 is provided with a battery 2 inside, and the battery 2 may be arranged at a bottom or head or tail of the vehicle 1. The battery 2 can be used to power the vehicle 1. For example, the battery 2 can be used as an operating power source for the vehicle 1.

The vehicle 1 may further include a controller 3 and a motor 4. The controller 3 is configured to control the battery 2 to supply power to the motor 4, for example, to meet electrical energy requirements in starting, navigating, or running the vehicle 1.

In some embodiments of the present application, the battery 2 serves not only as an operating power supply of the vehicle 1, but may also serve as a driving power supply of the vehicle 1 to provide driving power for the vehicle 1 in place of or partly in place of fuel oil or natural gas.

FIG. 2 is an exploded schematic diagram of a battery provided in some embodiments of the present application. As shown in FIG. 2, the battery 2 includes a box 5 and a battery cell 6, and the battery cell 6 is accommodated in the box 5.

The box 5 is configured to accommodate the battery cell 6. The box 5 may be one of various structures. In some embodiments, the box 5 may include a first box portion 5a and a second box portion 5b. The first box portion 5a and the second box portion 5b fit and cover each other. The first box portion 5a and the second box portion 5b together define an accommodation space 5c configured to accommodate the battery cell 6. The second box portion 5b may be a hollow structure with one open end, and the first box portion 5a is a sheet structure, so that the first box portion 5a fits and covers the open side of the second box portion 5b to form the box 5 with the accommodation space 5c; alternatively, the first box portion 5a and the second box portion 5b may both be a hollow structure with one open end, and the open side of the first box portion 5a fits and covers the open side of the second box portion 5b to form the box 5 with the accommodation space 5c. Of course, the first box portion 5a and the second box portion 5b may be of various shapes, for example, cylindrical or prismatic.

To improve airtightness between the first box portion 5a and the second box portion 5b that are connected, a sealing element such as a sealant or a sealing ring may be disposed between the first box portion 5a and the second box portion 5b.

Assuming that the first box portion 5a fits on the top of the second box portion 5b, the first box portion 5a may also be referred to as an upper box, and the second box portion 5b may also be referred to as a lower box.

In the battery 2, there may be one or more battery cells 6. If there are a plurality of battery cells 6, the plurality of battery cells 6 can be connected in series or in parallel or in parallel and series, and "connected in parallel and series" means that there are both series and parallel connections in the plurality of battery cells 6. The plurality of battery cells 6 may be directly connected in series, in parallel, or in parallel and series, and then a whole formed by the plurality of battery cells 6 is accommodated in the box 5. Certainly, the plurality of battery cells 6 may first be connected in series or in parallel or in parallel and series to form battery modules, and then a plurality of battery modules are connected in series or in parallel or in parallel and series to form a whole that is accommodated in the box 5.

The battery cell 6 can be a minimum unit for forming the battery.

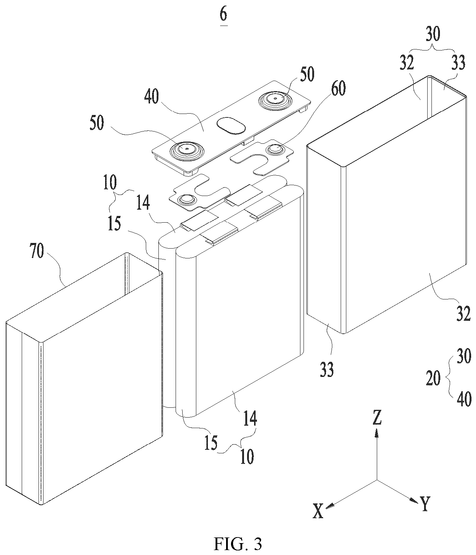

FIG. 3 is a schematic exploded view of the battery cell according to some embodiments of the present application.

As shown in FIG. 3, in some embodiments, the battery cell 6 includes a shell 20 and electrode assemblies 10 accommodated in the shell 20.

The electrode assembly 10 includes a positive electrode and a negative electrode. During a charging/discharging process of the battery cell 6, active ions (such as lithium ions) are intercalated and deintercalated back and forth between the positive and negative electrodes. Optionally, the electrode assembly 10 further includes a separator disposed between the positive and negative electrodes. The separator reduces a risk of a short circuit between the positive and negative electrodes and allows the active ions to pass through.

In some embodiments, the positive electrode may be a positive electrode plate. The positive electrode plate may include a positive current collector and a positive active material layer disposed on at least one surface of the positive current collector.

As an example, the positive current collector includes two surfaces opposite to each other in a thickness direction of the current collector. The positive active material layer is disposed on one or both of the two opposite surfaces of the positive current collector.

In an example, the positive current collector can be a metal foil or a composite current collector. For example, as the metal foil, stainless steel, copper, aluminum, nickel, carbon electrode, carbon, nickel, titanium, silver-surface-treated aluminum or stainless steel, or the like may be used. The composite current collector can include a high molecular material substrate layer and a metal layer. The composite current collector can be formed by forming a metal material (aluminum, an aluminum alloy, nickel, a nickel alloy, titanium, a titanium alloy, silver, a silver alloy, or the like) on a high molecular material substrate (a substrate such as polypropylene, polyethylene terephthalate, polybutylene terephthalate, polystyrene, or polyethylene).

In an example, the positive active material layer includes a positive active material, the positive active material may include at least one of the following materials: a lithium-containing phosphate salt, a lithium transition metal oxide, and respective modified compounds thereof. However, the present application is not limited to these materials, and other conventional materials that may be used as the positive active material layer of the battery may also be used. For these positive active material layers, only one may be used alone, or at least two may be used in combination. An example of the lithium-containing phosphate salt may include, but is not limited to, at least one of lithium iron phosphate (such as LiFePO₄ (which may also be referred to as LFP for short)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. An example of the lithium transition metal oxide may include, but is not limited to, at least one of a lithium cobalt oxide (such as LiCoO₂), a lithium nickel oxide (such as LiNiO₂), a lithium manganese oxide (such as LiMnO₂ or LiMn2O₄), a lithium nickel cobalt oxide, a lithium manganese cobalt oxide, a lithium nickel cobalt manganese oxide (such as LiNi_{1/3}Co_{1/3}Mn_{1/3}O₂ (which can also be referred to as NCM₃₃₃ for short), LiNi_{0.5}Co_{0.2}Mn_{0.3}O₂(which can also be referred to as NCM₅₂₃), LiNi_{0.5}Co_{0.25}Mn_{0.25}O₂(which can also be referred to as NCM₂₁₁), LiNi_{0.6}Co_{0.2}Mn_{0.2}O₂(which can also be referred to as NCM₆₂₂), LiNi_{0.8}Co_{0.1}Mn_{0.1}O₂(which can also be referred to as NCM₈₁₁), a lithium nickel cobalt aluminium oxide (such as LiNi_{0.80}Co_{0.15}Al_{0.05}O₂), and modified compounds thereof.

In some embodiments, the positive electrode may be made of foamed metal. The foamed metal can be foamed nickel, foamed copper, foamed aluminum, a foamed alloy, foamed carbon, or the like. When the foamed metal is used as the positive electrode, a surface of the foamed metal may not be provided with the positive active material layer, or of course, may be provided with the positive active material layer. In an example, it is also possible to fill or/and deposit a lithium source material, potassium metal, or sodium metal within the foamed metal, where the lithium source material is lithium metal and/or a lithium-rich material.

In some embodiments, the negative electrode may be a negative electrode plate. The negative electrode plate may include a negative current collector.

In an example, the negative current collector can be a metal foil, foamed metal, or a composite current collector. For example, as the metal foil, silver-surface-treated aluminum or stainless steel, stainless steel, copper, aluminum, nickel, carbon electrode, carbon, nickel, titanium, or the like may be used. The foamed metal can be foamed nickel, foamed copper, foamed aluminum, a foamed alloy, foamed carbon, or the like. The composite current collector can include a polymer material base layer and a metal layer. The composite current collector can be formed by forming a metal material (copper, a copper alloy, nickel, a nickel alloy, titanium, a titanium alloy, silver, a silver alloy, or the like) on a high molecular material substrate (a substrate such as polypropylene, polyethylene terephthalate, polybutylene terephthalate, polystyrene, or polyethylene).

As an example, the negative electrode plate may include a negative current collector and a negative active material disposed on at least one surface of the negative current collector.

For example, the negative current collector includes two surfaces opposite to each other in a thickness direction thereof. The negative active material is disposed on either or both of the two opposite surfaces of the negative current collector.

In an example, the negative active material may be a negative active material that is well known for use in a battery cell in the art. In an example, the negative active material can include at least one of the following materials: artificial graphite, natural graphite, soft carbon, hard carbon, a silicon-based material, a tin-based material, lithium titanate, and the like. The silicon-based material may be selected from at least one of monomeric silicon, a silicon oxide compound, a silicon-carbon composite, a silicon nitrogen composite, and a silicon alloy. The tin-based material may be selected from at least one of monomeric tin, a tin oxide compound, and a tin alloy. However, the present application is not limited to these materials, and other conventional materials that may be used as the negative active material of the battery may also be used. For these negative active materials, only one may be used alone, or at least two may be used in combination.

In some embodiments, the material of the positive current collector may be aluminum, and the material of the negative current collector may be copper.

In some embodiments, the separator includes a separator. The present application has no special limitation on a type of the separator, and any well-known porous structure separator with good chemical and mechanical stability can be selected.

In an example, a main material of the separator may be selected from at least one of fiberglass, non-woven fabric, polyethylene, polypropylene, polyvinylidene fluoride, and ceramic. The separator may be a single-layer thin film or a multi-layer composite thin film, and there is no particular limitation. When the separator is the multi-layer composite thin film, a material of each layer can be the same or different, and there is no particular limitation. The separator can be a single component between the positive and negative electrodes, or can be attached to surfaces of the positive and negative electrodes.

In some embodiments, the separator is a solid electrolyte. The solid electrolyte is located between the positive and negative electrodes, and transports ions and separates the positive electrode from the negative electrode.

In some embodiments, the battery cell also includes an electrolyte, and the electrolyte is for transporting ions between the positive and negative electrodes. A type of the electrolyte is not specifically limited in the present application, and may be selected based on requirements. The electrolyte can be liquid, gelatinous, or solid.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bis(trifluoromethanesulfonyl)imide, lithium trifluoromethanesulfonate, lithium difluorophosphate, lithium difluoro(oxalato)borate, lithium bis(oxalate)borate, lithium difluoro(bisoxalato)phosphate, and lithium tetrafluoro(oxalato)phosphate.

In some embodiments, the solvent can be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylidene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane. The solvent may alternatively be selected as an ether solvent. The ether solvent may include one or more of dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a framework using a polymer as an electrolyte, paired with ionic liquid-lithium salt.

The solid-state electrolytes include a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene difluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide, silver germanium sulfide) or an amorphous sulfide), a halide solid electrolyte, a nitride solid electrolyte, or a hydride solid electrolyte.

In an example, the composite solid electrolyte is formed by adding an inorganic solid electrolyte filling to a polymer solid electrolyte.

In some embodiments, the electrode assembly 10 is of a winding structure. The positive electrode plate and negative electrode plate are wound to form the winding structure.

In some embodiments, the electrode assembly 10 is of a stacking structure.

As an example, a plurality of positive electrode plates and a plurality of negative electrode plates are disposed. The plurality of positive electrode plates and the plurality of negative electrode plates are stacked alternately.

As an example, a plurality of positive electrode plates may be disposed, and the negative electrode plate is folded to form a plurality of stacked fold sections. One positive electrode plate is sandwiched between adjacent fold sections.

As an example, both the positive electrode plate and the negative electrode plate are folded to form a plurality of stacked fold sections.

As an example, a plurality of separators may be disposed, and each of the separators may be disposed between any positive electrode plate and negative electrode plate that are adjacent to each other.

As an example, the separators may be disposed continuously, and each separator may be disposed in a folded or wound manner between any positive electrode plate and negative electrode plate that are adjacent to each other.

In some embodiments, a shape of the electrode assembly 10 may be a cylinder, flat, polygonal prism, or the like.

In some embodiments, the electrode assembly 10 is provided with tabs, and the tabs can conduct an electric current from the electrode assembly 10. The tabs include positive and negative tabs.

In some embodiments, the shell 20 includes a housing 30 and an end cap 40, the housing 30 has an opening, and the end cap 40 covers the opening.

The housing 30 is a component that fits the end cap 40 to form an internal cavity of the battery cell 6, and the formed internal cavity can be used to accommodate the electrode assemblies 10, the electrolyte, and other components.

The housing 30 and the end cap 40 can be independent components. For example, the opening can be provided on the housing 30, and the end cap 40 covers the opening at the opening to form the internal cavity of the battery cell 6.

The housing 30 can be of a plurality of shapes and sizes, such as cuboid, cylindrical, or hexagonal. Specifically, the shape of the housing 30 can be determined based on the specific shape and size of the electrode assembly 10. The housing 30 may be made of a plurality of materials. For example, the material of the housing 30 includes but is not limited to copper, iron, aluminum, stainless steel, an aluminum alloy, and the like.

A shape of the end cap 40 can be adapted to the shape of the housing 30 to fit the housing 30. A material of the end cap 40 and the material of the housing 30 can be the same or different. Optionally, the end cap 40 can be made of a material with a specific hardness and strength (for example, copper, iron, aluminum, stainless steel, an aluminum alloy, or plastic), so that the end cap 40 is not prone to deform when squeezed and collided, so that the battery cell 6 can have higher structural strength, and reliability performance can also be improved.

The end cap 40 is connected to the housing 30 by welding, bonding, clamping, or in other manners.

The housing 30 can have an opening at one end or have openings at both ends. In some examples, the housing 30 may be of a structure of an opening at one side, and a quantity of end caps 40 is set as one and the end cap covers the housing 30. In other examples, the housing 30 may alternatively be of a structure of openings at both sides, and a quantity of end caps 40 is set as two and the two end caps 40 respectively cover two openings of the housing 30.

In some embodiments, the battery cell 6 includes an electrode terminal 50. The electrode terminal 50 is electrically connected to the tab for outputting or inputting electrical energy of the battery cell 6.

In some embodiments, the battery cell 6 further includes an adapter piece 60, and the adapter piece 60 connects the tab and the electrode terminal 50.

In some embodiments, the battery cell 6 further includes an insulator 70 arranged in the shell 20, the insulator 70 has an accommodating cavity, and at least a part of the electrode assembly 10 is accommodated in the accommodation cavity. The insulator 70 can be used to insulate and separate the electrode assembly 10 from the housing 30.

In some embodiments, the insulator 70 is formed by bending an insulating sheet.

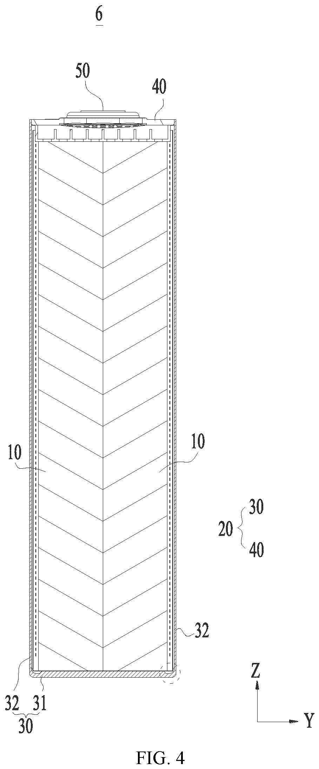

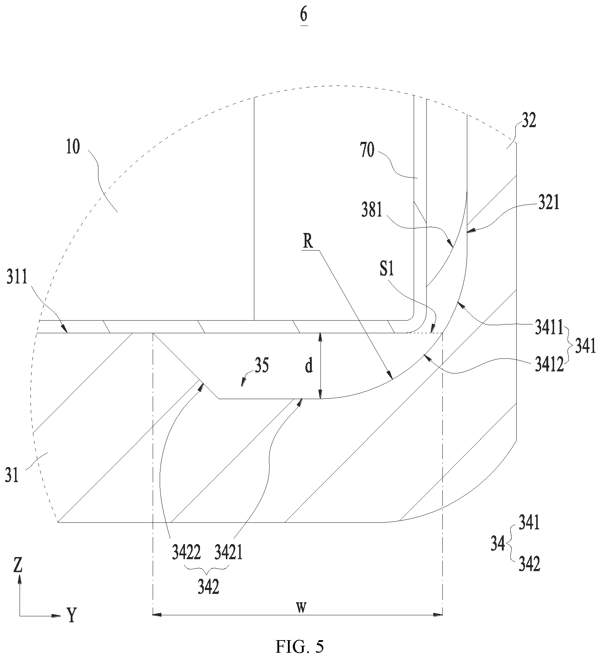

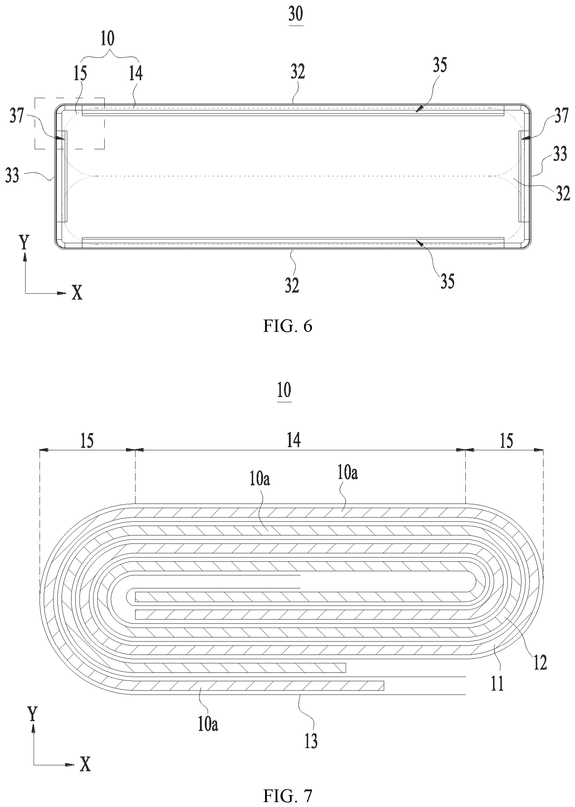

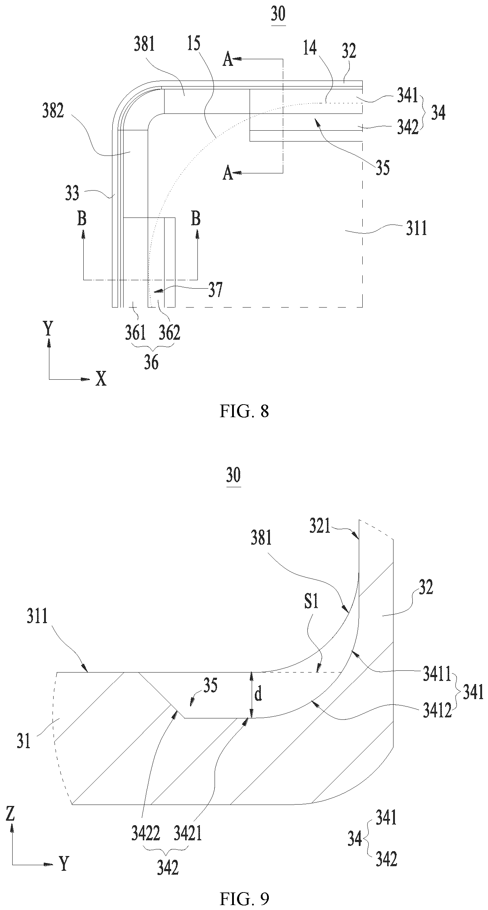

FIG. 4 is a schematic sectional view of a battery cell provided in some embodiments of the present application. FIG. 5 is an enlarged schematic diagram of a circle in FIG. 4. FIG. 6 is a top-down schematic diagram of a housing of a battery cell provided in some embodiments of the present application, where a dashed line is an outline of a projection of electrode assemblies on the housing. FIG. 7 is a schematic diagram of an electrode assembly of a battery cell provided in some embodiments of the present application. FIG. 8 is an enlarged schematic diagram of an oblong in FIG. 6.

Refer to FIG. 4 to FIG. 8. An embodiment of the present application provides a battery cell 6, and the battery cell 6 includes a shell 20 and electrode assemblies 10 accommodated in the shell 20. The shell 20 includes a first plate 31 and a second plate 32, the second plate 32 is intersected with the first plate 31 for arrangement, the first plate 31 includes a first inner wall surface 311 facing the electrode assemblies 10, and the second plate 32 includes a second inner wall surface 321 facing the electrode assemblies 10. The shell 20 includes a third inner wall surface 34 connecting the first inner wall surface 311 and the second inner wall surface 321, at least a part of the third inner wall surface 34 defines a first avoidance groove 35, in a thickness direction Z of the first plate, the first avoidance groove 35 is concave relative to the first inner wall surface 311 and towards one side away from the electrode assemblies 10, and a part of a projection of the electrode assemblies 10 on the first plate 31 overlaps the first avoidance groove 35.

The shell 20 can accommodate one electrode assembly 10 or a plurality of electrode assemblies 10.

The first plate 31 and the second plate 32 are arranged at a preset angle, and the angle between the first plate 31 and the second plate 32 can be an acute angle, a right angle, or an obtuse angle.

For example, a plane on which the first inner wall surface 311 is located is intersected with a plane on which the second inner wall surface 321 is located.

There may be one or more first plates 31. There may be one or more second plates 32. For example, there are two second plates 32, and the two second plates 32 are respectively connected to two ends of the first plate 31. The second inner wall surface 321 of the at least one second plate 32 is connected to the first inner wall surface 311 through the third inner wall surface 34.

For example, the plane on which the first inner wall surface 311 is located is a virtual first datum plane S1, and the electrode assemblies 10 are located on one side of the first datum plane S1. The first datum plane S1 can be used to define a boundary of the first avoidance groove 35. An opening of the first avoidance groove 35 is located on the first datum plane S1.

In some examples, the first avoidance groove 35 may be defined by one part of the third inner wall surface 34, to be specific, a groove wall surface of the first avoidance groove 35 is one part of the third inner wall surface 34, and the other part of the third inner wall surface 34 may be located outside the first avoidance groove 35 (for example, on one side that is of the first datum plane S1 and that faces the electrode assemblies 10). In an alternative embodiment, the first avoidance groove 35 can be defined by the entire third inner wall surface 34, in other words, a groove wall surface of the first avoidance groove 35 is the third inner wall surface 34.

In the thickness direction Z of the first plate, the part of the projection of the electrode assemblies 10 on the first plate 31 overlaps the first avoidance groove 35.

In embodiments of the present application, the first avoidance groove 35 can avoid the electrode assemblies 10, so that when the battery cell 6 is subject to external impact, a risk of squeezing the electrode assemblies 10 by a location in which the first plate 31 is intersected with the second plate 32 is reduced, falling off of an active material of the electrode assembly 10 is reduced, capacity attenuation of the battery cell 6 slows down, and reliability of the battery cell 6 is improved.

The first avoidance groove 35 can hide an uneven area formed at the location in which the first plate 31 is intersected with the second plate 32, increase a distance between the uneven area and the electrode assemblies 10, and reduce a risk that the uneven area squeezes the electrode assemblies 10. In addition, by arranging the first avoidance groove 35, a supporting plate in a conventional battery cell 6 can be omitted. This reduces a quantity of components of the battery cell 6, simplify a structure of the battery cell 6, and improve energy density of the battery cell 6.

In some embodiments, the shell 20 includes a housing 30 and an end cap 40, the housing 30 has an opening, and the end cap 40 covers the opening. The housing 30 includes a first plate 31 and a second plate 32.

In some embodiments, the housing 30 is an integrated molding structure. For example, the housing 30 may be integrally formed through a stretching process.

In some embodiments, the first inner wall surface 311 is a planar surface.

In some embodiments, the second inner wall surface 321 is a planar surface.

In some embodiments, an angle between the first inner wall surface 311 and the second inner wall surface 321 can be 85°-95°. Optionally, the first inner wall surface 311 is perpendicular to the second inner wall surface 321.

In some embodiments, the first inner wall surface 311 can be used to support the electrode assemblies 10.

For example, the first inner wall surface 311 can directly support the electrode assemblies 10 or indirectly support the electrode assemblies 10 through other components (such as the insulator 70).

When the battery cell 6 is in an operating state, the first inner wall surface 311 can be positioned on a lower side of the electrode assemblies 10 to support the electrode assemblies 10.

The first inner wall surface 311 can support the electrode assemblies 10, so as to reduce a risk that a corner of the electrode assemblies 10 falls into the first avoidance groove 35, increase a distance, along the thickness direction Z of the first plate, between the location in which the first plate 31 is intersected with the second plate 32 and the electrode assemblies 10, reduce the risk of squeezing the electrode assemblies 10 by the location in which the first plate 31 is intersected with the second plate 32, reduce the falling off of the active material of the electrode assembly 10, and improve the reliability of the battery cell 6.

In some embodiments, the electrode assembly 10 includes a first electrode plate 11 and a second electrode plate 12 with opposite polarities.

For example, one of the first electrode plate 11 and the second electrode plate 12 is a positive electrode plate, and the other one is a negative electrode plate.

In some embodiments, the electrode assembly 10 is of a winding structure or a stacking structure.

In some embodiments, the first electrode plate 11 and the second electrode plate 12 both include a straight layer 10a, and a plurality of straight layers 10a are stacked for arrangement.

The straight layer 10a is in a straight state. For example, the straight layer 10a can be perpendicular to a stacking direction of the plurality of straight layers 10a.

The straight layer 10a of the first electrode plate 11 can be a part that is of the first electrode plate 11 and that is in the straight state. The first electrode plate 11 may include one straight layer 10a, or may include a plurality of straight layers 10a. For example, in a winding electrode assembly 10, one first electrode plate 11 may include a plurality of straight layers 10a; and in a stacking electrode assembly 10, one first electrode plate 11 may include only one straight layer 10a.

The straight layer 10a of the second electrode plate 12 can be a part that is of the second electrode plate 12 and that is in the straight state. The second electrode plate 12 may include one straight layer 10a, or may include a plurality of straight layers 10a. For example, in a winding electrode assembly 10, one second electrode plate 12 may include a plurality of straight layers 10a; and in a stacking electrode assembly 10, one second electrode plate 12 may include only one straight layer 10a.

In some embodiments, the stacking direction of the plurality of straight layers 10a of the electrode assembly 10 may be parallel to the thickness direction Z of the first plate or perpendicular to the thickness direction Z of the first plate.

In some embodiments, the straight layer 10a faces the second plate 32 for arrangement. For example, the straight layer 10a faces the second plate 32 along the first direction Y for arrangement.

In some embodiments, a plurality of straight layers 10a of the electrode assembly 10 are stacked along the first direction Y, and the first direction Y may be parallel to a thickness direction of the second plate 32.

In some embodiments, the second plate 32 is perpendicular to the first plate 31. Correspondingly, the first direction Y is perpendicular to the thickness direction Z of the first plate.

In some embodiments, the first inner wall surface 311 is perpendicular to the thickness direction Z of the first plate, and the second inner wall surface 321 is perpendicular to the thickness direction of the second plate 32.

In some embodiments, two ends of the first avoidance groove 35 are both beyond the straight layer 10a along the second direction X. The thickness direction Z of the first plate, the first direction Y, and the second direction X are perpendicular to each other, and the first direction Y is parallel to the thickness direction of the second plate 32.

In embodiments of the present application, the two ends of the first avoidance groove 35 along the second direction X are both beyond the straight layer 10a. In this way, the straight layer 10a can be avoided as much as possible, and a minimum distance between the location in which the first plate 31 is intersected with the second plate 32 and a straight layer 10a closest to the second plate 32 is increased, so that when the battery cell 6 is subject to the external impact, a risk of squeezing the straight layer 10a by the location in which the first plate 31 is intersected with the second plate 32 is reduced, falling off of an active material of the straight layer 10a is reduced, and the reliability of the battery cell 6 is improved.

In some embodiments, a size of the first avoidance groove 35 along the second direction X is greater than a size of the straight layer 10a along the second direction X.

In some embodiments, the shell 20 further includes third plates 33, and the third plate 33 is located on one side of the electrode assembly 10 along the second direction X, and is connected to the first plate 31 and the second plate 32. In the second direction X, the first avoidance groove 35 is spaced apart from the third plate 33.

A junction of the first plate 31, the second plate 32, and the third plate 33 is spaced apart from the first avoidance groove 35 by a specific distance along the second direction X, so that a risk that the first avoidance groove 35 extends to the junction of the three plates is reduced, stress concentration at the junction of the three plates is reduced, and strength and reliability of the shell 20 are improved.

In some embodiments, the first plate 31, the second plate 32, and the third plate 33 are perpendicular to each other.

In some embodiments, a thickness direction of the third plate 33 is parallel to the second direction X.

In some embodiments, the first avoidance groove 35 is a straight groove extending along the second direction X.

In some embodiments, the size of the first avoidance groove 35 along the second direction X is smaller than a size of the first plate 31 along the second direction X.

In some embodiments, the first electrode plate 11 and the second electrode plate 12 are wound for arrangement, the electrode assembly 10 includes a straight area 14 and a bending area 15, the bending area 15 is connected to end portions of the straight area 14 along the second direction X, and a plurality of straight layers 10a are located in the straight area 14.

The straight area 14 is an area that has a straight structure and that is of the electrode assembly 10. In the straight area 14, the first electrode plate 11 and the second electrode plate 12 are both in the straight state. The straight layer 10a of the first electrode plate 11 is a layer that is of the first electrode plate 11 and that is in the straight area 14, and the straight layer 10a of the second electrode plate 12 is a layer that is of the second electrode plate 12 and that is in the straight area 14. Optionally, both the first electrode plate 11 and the second electrode plate 12 include a plurality of straight layers 10a.

The bending area 15 is an area that has a bending structure and that is of the electrode assembly 10. In the bending area 15, the first electrode plate 11, the second electrode plate 12, and a separator 13 are all bent. For example, a part that is of the first electrode plate 11 and that is located in the bending area 15 is roughly bent into an arc surface, and a part that is of the second electrode plate 12 and that is located in the bending area 15 is roughly bent into an arc surface.

In some embodiments, in the second direction X, a size of the straight area 14 is equal to a size of the straight layer 10a.

In some embodiments, the electrode assembly 10 includes two bending areas 15, and the two bending areas 15 are respectively connected to two ends of the straight area 14 along the second direction X.

In some embodiments, the size of the first avoidance groove 35 along the second direction X is smaller than a size of the electrode assembly 10 along the second direction X.

In some embodiments, in the second direction X, the two bending areas 15 are respectively beyond the two ends of the first avoidance groove 35.

In the first direction Y, there is a gap between the bending area 15 and the second plate 32. When the battery cell 6 is subject to external impact, a risk of squeezing the bending area 15 by the location in which the first plate 31 is intersected with the second plate 32 is relatively small. In particular, a distance between the second plate 32 and an end portion that is of the bending area 15 and that is away from the straight area 14 in the second direction X is relatively large, and the end portion that is of the bending area 15 and that is away from the straight area 14 in the second direction X is hardly affected by the second plate 32. Therefore, the first avoidance groove 35 does not need to be beyond the bending area 15 in the second direction X.

In some embodiments, the shell 20 further includes the third plates 33, and the third plate 33 is located on the side of the electrode assembly 10 along the second direction X, and is connected to the first plate 31 and the second plate 32.

The third plate 33 further includes a fourth inner wall surface 331 facing the electrode assemblies 10. The shell 20 further includes a fifth inner wall surface 36 connecting the first inner wall surface 311 and the fourth inner wall surface 331, at least a part of the fifth inner wall surface 36 defines a second avoidance groove 37, and in the thickness direction Z of the first plate, the second avoidance groove 37 is concave relative to the first inner wall surface 311 and towards the side away from the electrode assemblies 10. In the thickness direction Z of the first plate, at least a part of a projection of the bending area 15 on the first plate 31 overlaps the second avoidance groove 37.

For example, the plane on which the first inner wall surface 311 is located, the plane on which the second inner wall surface 321 is located, and a plane on which the fourth inner wall surface 331 is located are intersected in pairs.

The first datum plane S1 can be used to define a boundary of the second avoidance groove 37. An opening of the second avoidance groove 37 is located on the first datum plane S1.

In some examples, the second avoidance groove 37 may be defined by one part of the fifth inner wall surface 36, to be specific, a groove wall surface of the second avoidance groove 37 is one part of the fifth inner wall surface 36, and the other part of the fifth inner wall surface 36 may be located outside the second avoidance groove 37 (for example, on one side that is of the first datum plane S1 and that faces the electrode assemblies 10). In an alternative embodiment, the second avoidance groove 37 can be defined by the entire fifth inner wall surface 36, in other words, a groove wall surface of the second avoidance groove 37 is the fifth inner wall surface 36.

In the embodiments of the present application, the second avoidance groove 37 can avoid the bending area 15, so that when the battery cell 6 is subject to the external impact, a risk of squeezing the bending area 15 at a location in which the first plate 31 is intersected with the third plate 33 is reduced, the falling off of the active material of the electrode assembly 10 is reduced, the capacity attenuation of the battery cell 6 slows down, and the reliability of the battery cell 6 is improved.

In some embodiments, the second avoidance groove 37 is spaced apart from the second plate 32 along the first direction Y.

The junction of the first plate 31, the second plate 32, and the third plate 33 is spaced apart from the second avoidance groove 37 by a specific distance along the first direction Y, so that a risk that the second avoidance groove 37 extends to the junction of the three plates is reduced, the stress concentration at the junction of the three plates is reduced, and the strength and the reliability of the shell 20 are improved.

In some embodiments, the second avoidance groove 37 is a straight groove extending along the first direction Y.

In some embodiments, a size of the second avoidance groove 37 along the first direction Y is smaller than a size of the first plate 31 along the first direction Y.

The surface that is of the bending area 15 and that faces the third plate 33 is roughly bent into an arc surface, so there is a gap between the bending area 15 and the third plate 33. When the battery cell 6 is subject to the external impact, only an end portion that is of the bending area 15 and that is closest to the third plate 33 has a risk of being squeezed by the location in which the first plate 31 is intersected with the third plate 33. A size of the end portion, that is of the bending area 15 and that is closest to the third plate 33, in the first direction Y is smaller than a size of the straight area 14 in the first direction Y, so that in the first direction Y, the second avoidance groove 37 may have a size smaller than a size of the first plate 31.

In some embodiments, there are a plurality of electrode assemblies 10, and the electrode assemblies 10 are stacked along the first direction Y for arrangement. Optionally, there are two or four electrode assemblies 10.

In some embodiments, in the thickness direction Z of the first plate, a projection of a bending area 15 of each electrode assembly 10 on the first plate 31 overlaps the second avoidance groove 37.

The second avoidance groove 37 can avoid all bending areas 15 of the plurality of electrode assemblies 10, so as to reduce the falling off of the active material of the electrode assembly 10 and improve the reliability of the battery cell 6 when the battery cell 6 is subject to the external impact.

In some embodiments, the housing 30 is a square housing.

In some embodiments, the shell 20 includes two second plates 32 arranged opposite to each other along the first direction Y and two third plates 33 arranged opposite to each other along the second direction X. A second inner wall surface 321 of each second plate 32 is connected to the first inner wall surface 321 through at least one third inner wall surface 34, and a fourth inner wall surface 331 of each third plate 33 is connected to the first inner wall surface 311 through at least one fifth inner wall surface 36.

Each third inner wall surface 34 defines the first avoidance groove 35, and each fifth inner wall surface 36 defines the second avoidance groove 37.

For example, one third inner wall surface 34 connects one end of the first inner wall surface 321 along the first direction Y and a second inner wall surface 321 of one second plate 32, and another third inner wall surface 34 connects the other end of the first inner wall surface 321 along the first direction Y and a second inner wall surface 321 of the other second plate 32.

For example, one fifth inner wall surface 36 connects one end of the first inner wall surface 321 along the second direction X and a fourth inner wall surface 331 of one third plate 33, and another fifth inner wall surface 36 connects the other end of the first inner wall surface 321 along the second direction X and a fourth inner wall surface 331 of the other third plate 33.

For example, in the thickness direction Z of the first plate, only one first avoidance groove 35 can overlap the projection of the electrode assemblies 10 on the first plate 31, or two first avoidance grooves 35 can both overlap the projection of the electrode assemblies 10 on the first plate 31.

For example, in the thickness direction Z of the first plate, only one second avoidance groove 37 can overlap the projection of the electrode assemblies 10 on the first plate 31, or two second avoidance grooves 37 can both overlap the projection of the electrode assemblies 10 on the first plate 31.

In the embodiments of the present application, by arranging the first avoidance groove 35 and second avoidance grooves 37 around the first plate 31, the electrode assemblies 10 can still be effectively avoided when positions of the electrode assemblies 10 are deviated, and a risk of squeezing the corner of the electrode assemblies 10 can be reduced.

In some embodiments, the housing 30 includes the first plate 31, the two second plates 32, and the two third plates 33. For example, the first plate 31 can be a bottom plate of the housing 30. The two second plates 32 are two side plates that are of the housing 30 and that are opposite to each other along the first direction Y, and the two third plates 33 are two side plates that are of the housing 30 and that are opposite to each other along the second direction X.

In some embodiments, there are two first avoidance grooves 35, two second avoidance grooves 37, and the two first avoidance grooves 35 and the two second avoidance grooves 37 are alternately arranged along a circumferential direction of the housing 30.

In some embodiments, the third inner wall surface 34 includes a first surface 341 and a second surface 342, the first surface 341 is an arc surface and is connected to the second inner wall surface 321, and the second surface 342 connects the first surface 341 and the first inner wall surface 311. At least a part of the first surface 341 and the second surface 342 define the first avoidance groove 35.

The second surface 342 may include at least one of a planar surface and an arc surface. In some examples, the second surface 342 may be a planar surface. In other examples, the second surface 342 may include a plurality of planar surfaces intersected with each other for arrangement. In still other examples, the second surface 342 may include a planar surface and an arc surface.

The groove wall surface of the first avoidance groove 35 may include only a part of the first surface 341 or the entire first surface 341.

The first surface 341 can be directly connected to the second inner wall surface 321, or can alternatively be indirectly connected to the second inner wall surface 321 through other parts of the third inner wall surface 34.

By setting the arc first surface 341, an approximate round-angle structure can be formed at the location in which the first plate 31 is intersected with the second plate 32, so as to disperse stress during a molding process, reduce the stress concentration, and improve the reliability of the shell 20. At least the part of the first surface 341 hides in the first avoidance groove 35, so that when the battery cell 6 is subject to the external impact, a risk of squeezing the electrode assemblies 10 by the first surface 341 is reduced, the falling off of the active material of the electrode assembly 10 is reduced, the capacity attenuation of the battery cell 6 slows down, and the reliability of the battery cell 6 is improved.

In some embodiments, the first surface 341 includes a first area 3411 and a second area 3412, the first area 3411 protrudes, in the thickness direction Z of the first plate, from a side that is of the first inner wall surface 311 and that faces the electrode assemblies 10, and is connected to the second inner wall surface 321, the second area 3412 connects the first area 3411 and the second surface 342, and the second area 3412 and the second surface 342 define the first avoidance groove 35.

For example, an intersection line of the first datum plane S1 and the first surface 341 is a boundary line between the first area 3411 and the second area 3412.

The separator 13 of the electrode assembly 10 can play the role of support and cushion to a specific extent. Therefore, even if the first surface 341 has the first area 3411 protruding from the first inner wall surface 311, the separator 13 can also separate the first area 3411 from an electrode plate of the electrode assembly 10 to a specific extent, so as to reduce the falling off of the active material of the electrode assembly 10 and improve the reliability of the battery cell 6. In the embodiments of the present application, only a part (namely, the second area 3412) of the first surface 341 is hided in the first avoidance groove 35. This can reduce a requirement on a depth of the first avoidance groove 35 and reduce molding difficulty.

In some embodiments, the first surface 341 is a circular arc surface, two ends of the first surface 341 are respectively tangent to the second inner wall surface 321 and the second surface 342.

In some embodiments, a radius of the first surface 341 is R; and in the thickness direction Z of the first plate, a size of an area that is of the first surface 341 and that is in the first avoidance groove 35 is d. 0.1R ≤ d ≤ R.

For example, the area that is of the first surface 341 and that is in the first avoidance groove 35 can be the second area 3412.

In the embodiments of the present application, d is limited to be greater than or equal to 0.1R, so that a circular arc surface hidden in the first avoidance groove 35 has a relatively large arc length, so as to effectively avoid the electrode assemblies 10, reduce the risk of squeezing the electrode assemblies 10 by the first surface 341, reduce the falling off of the active material of the electrode assembly 10, slow down the capacity attenuation of the battery cell 6, and improve the reliability of the battery cell 6.

In the embodiments of the present application, d is limited to be less than or equal to R, to limit a maximum depth of the first avoidance groove 35, reduce a strength loss of shell 20, and improve the reliability of the battery cell 6.

For example, d is 0.1R, 0.2R, 0.3R, 0.4R, 0.5R, 0.6R, 0.7R, 0.8R, 0.9R, or R.

In some embodiments, 0.3R ≤ d ≤ 0.9R, to further improve the reliability of the battery cell 6.

In some embodiments, in the thickness direction Z of the first plate, the maximum depth of the first avoidance groove 35 is equal to d.

In some embodiments, the second surface 342 is perpendicular to the second inner wall surface 321. Correspondingly, a central angle of the first surface 341 can be 90°.

In some embodiments, the second surface 342 includes a third area 3421 and a fourth area 3422 that are intersected with each other for arrangement, the third area 3421 is connected to the first surface 341 and parallel to the first inner wall surface 311, and the fourth area 3422 connects the third area 3421 and the first inner wall surface 311.

The fourth area 3422 can be a planar surface or an arc surface.

By arranging the third area 3421 parallel to the first inner wall surface 311, stress evenness can be improved in a squeezing molding process of the first avoidance groove 35.

In some embodiments, in the thickness direction of the second plate 32, a maximum size w of the first avoidance groove 35 is from 1 mm to 10 mm.

For example, w can be a maximum width of the first avoidance groove 35. Optionally, w is 1 mm, 2 mm, 3 mm, 4 mm, 5 mm, 6 mm, 7 mm, 8 mm, 9 mm, or 10 mm.

In the embodiments of the present application, w is limited to be greater than or equal to 1 mm, so as to improve a relatively large avoidance space, reduce the risk of squeezing the electrode assemblies 10 by the location in which the first plate 31 is intersected with the second plate 32, and improve the reliability. In the embodiments of the present application, w is limited to be less than or equal to 10 mm, so as to reduce flowing of materials, reduce the forming difficulty of the first avoidance groove 35, and improve evenness of the first plate 31 in the squeezing molding process of the first avoidance groove 35.

In some embodiments, w is from 3 mm to 8 mm, to further reduce the molding difficulty and improve the reliability.

In some embodiments, a maximum hardness of a part that is of the shell 20 and that corresponds to the first avoidance groove 35 along the thickness direction Z of the first plate is greater than a maximum hardness of a part that is of the first plate 31 and that corresponds to the first inner wall surface 311.

The part that is of the shell 20 and that corresponds to the first avoidance groove 35 along the thickness direction Z of the first plate may be referred to as a groove part for short. A minimum thickness of the groove part may be reduced due to setup of the first avoidance groove 35. Therefore, by increasing the maximum hardness of the groove part, a damage to structural strength caused by the setup of the first avoidance groove 35 can be reduced, a risk that the groove part cracks is reduced, and the reliability of the battery cell 6 is improved.

In some embodiments, the third inner wall surface 34 is located on one side that is of a plane on which the second inner wall surface 321 is located and that is close to the first inner wall surface 311.

For example, the plane on which the second inner wall surface 321 is located can be a second datum plane S2. Optionally, the first datum plane S1 is perpendicular to the second datum plane S2.

The third inner wall surface 34 can be formed under squeezing of an external die. After the third inner wall surface 34 is formed, the external die can be pulled out along the thickness direction Z of the first plate. In the embodiments of the present application, the third inner wall surface 34 is arranged on the side that is of the plane on which the second inner wall surface 321 is located and that is close to the first inner wall surface 311, so that interference of the second inner wall surface 321 to the external die can be reduced, and it is conducive to die pulling.

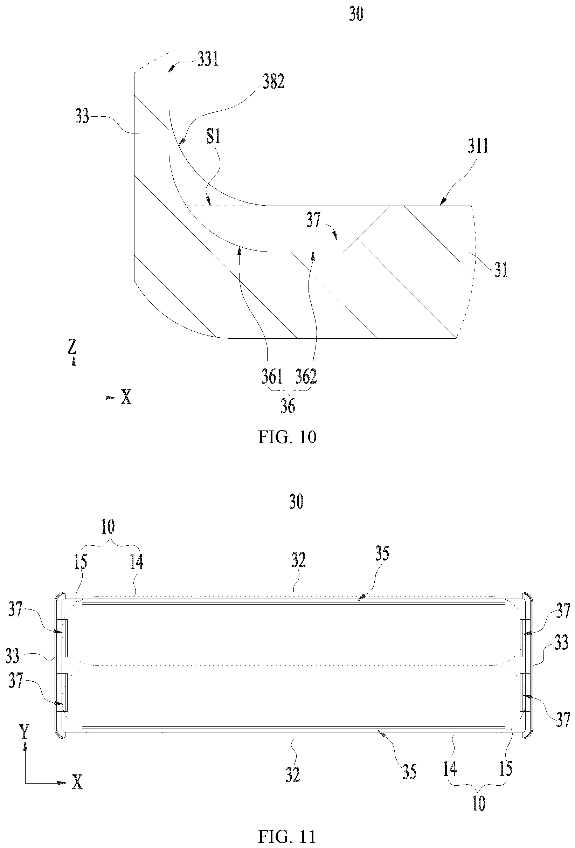

FIG. 9 is a partial cross-sectional view along the A-A direction in FIG. 8. FIG. 10 is a partial cross-sectional view along the A-A direction in FIG. 8. It is noted herein that, for ease of understanding,

FIG. 9 and FIG. 10 have been simplified and partial structures are omitted. For example, FIG. 9 shows only a cross-section of a part of the second plate, and FIG. 10 shows only a cross-section of a part of the third plate.

Refer to FIG. 8 to FIG. 10. In some embodiments, the shell 20 further includes a first circular arc surface 381, the first circular arc surface 381 is located on one side of the first avoidance groove 35 along the second direction X, and the first circular arc surface 381 connects the first inner wall surface 311 and the second inner wall surface 321.

In some embodiments, a radius of the first circular arc surface 381 is the same as that of the first surface 341.

In some embodiments, a center of the first surface 341 is arranged along the thickness direction Z of the first plate relative to a center of the first circular arc surface 381. For example, the center of the first surface 341 sinks by a specific distance (such as d) relative to the center of the first circular arc surface 381.

In some embodiments, in the thickness direction Z of the first plate, the first circular arc surface 381 does not overlap the electrode assemblies 10.

In some embodiments, the shell 20 further includes a second circular arc surface 382, the second circular arc surface 382 is located on one side of the second avoidance groove 37 along the first direction Y, and the second circular arc surface 382 connects the first inner wall surface 311 and the fourth inner wall surface 331.

In some embodiments, the fifth inner wall surface 36 includes a third surface 361 and a fourth surface 362, the third surface 361 is an arc surface and is connected to the fourth inner wall surface 331, and the fourth surface 362 is connected to the third surface 361 and the first inner wall surface 311. At least a part of the third surface 361 and the fourth surface 362 define the second avoidance groove 37.

In some embodiments, the third surface 361 is a circular arc surface.

In some embodiments, a radius of the second circular arc surface 382 is the same as that of the third surface 361.

In some embodiments, a center of the third surface 361 is arranged along the thickness direction Z of the first plate relative to a center of the second circular arc surface 382. For example, the center of the third surface 361 sinks by a specific distance (such as d) relative to the center of the second circular arc surface 382.

In some embodiments, in the thickness direction Z of the first plate, the second circular arc surface 382 does not overlap the electrode assemblies 10.

FIG. 11 is a top-down schematic diagram of a housing of a battery cell provided in some other embodiments of the present application, where a dashed line is an outline of a projection of electrode assemblies on the housing.

As shown in FIG. 11, in some embodiments, there are a plurality of electrode assemblies 10, and the electrode assemblies 10 are stacked along the first direction Y for arrangement. A plurality of fifth inner wall surfaces 36 spaced apart from each other along the first direction Y each connect the first inner wall surface 311 and the fourth inner wall surface 331, and the plurality of fifth inner wall surfaces 36 define a plurality of second avoidance grooves 37.

In the thickness direction Z of the first plate, each of the second avoidance grooves 37 at least overlaps a projection of a bending area 15 of one electrode assembly 10 on the first plate.

One fifth inner wall surface 36 defines one second avoidance groove 37.

One second avoidance groove 37 can be used to avoid a bending area 15 of only one electrode assembly 10, or can alternatively avoid bending areas 15 of at least two electrode assemblies 10.

The bending areas 15 of the plurality of electrode assemblies 10 are spaced apart from each other along the first direction Y for arrangement, so that a plurality of second avoidance grooves 37 spaced apart from each other can be arranged to avoid the bending areas 15 of the plurality of electrode assemblies 10, so that an extension length of a single second avoidance groove 37 can be reduced, and molding difficulty of the second avoidance groove 37 can be reduced.

In some embodiments, a quantity of fifth inner wall surfaces 36 connected to one end of the first inner wall surface 311 along the second direction X is equal to a quantity of electrode assemblies 10.

In some embodiments, each of the second avoidance grooves 37 overlaps a projection of only one bending area 15 of one electrode assembly 10 on the first plate 31.

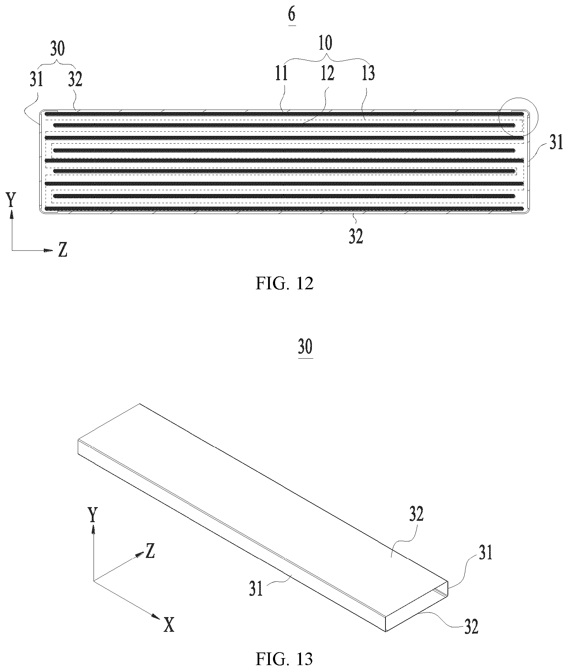

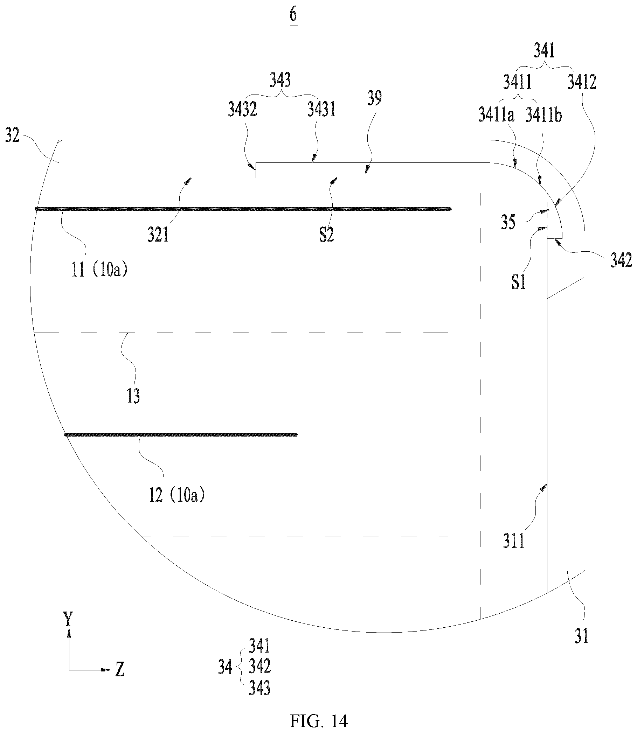

FIG. 12 is a schematic sectional view of a battery cell provided in some other embodiments of the present application. FIG. 13 is a schematic diagram of a structure of a housing of a battery cell provided in some embodiments of the present application. FIG. 14 is an enlarged schematic diagram of a circle in FIG. 12.

Refer to FIG. 12 to FIG. 14. In some embodiments, the electrode assembly 10 is of a stacking structure.

In some embodiments, the electrode assembly 10 includes a plurality of first electrode plates 11, the plurality of first electrode plates 11 are stacked along the first direction Y for arrangement, and each first electrode plate 11 includes a straight layer 10a.

In some embodiments, the electrode assembly 10 includes a plurality of second electrode plates 12, and the plurality of first electrode plates 11 and the plurality of second electrode plates 12 are alternately stacked along the first direction Y. Each second electrode plate 12 includes a straight layer 10a.

In some other embodiments, the electrode assembly 10 includes at least one second electrode plate 12, and the second electrode plate 12 is continuously folded to form a plurality of straight layers 10a that are stacked for arrangement. The plurality of straight layers 10a of the second electrode plates 12 and the plurality of first electrode plates 11 are alternately stacked along the first direction Y.

In some embodiments, the shell 20 includes two first plates 31 arranged opposite to each other along the thickness direction Z of the first plate and two second plates 32 arranged opposite to each other along the first direction Y. For example, the first plate 31 and the second plate 32 are alternately arranged along a circumference of the shell 20.

In some embodiments, two ends of a first inner wall surface 311 of each first plate 31 in the first direction Y are respectively connected to second inner wall surfaces 321 of the two second plates 32 via two third inner wall surfaces 34.

One end of the first inner wall surface 311 of the first plate 31 in the first direction Y is connected to a second inner wall surface 321 of one second plate 32 via one third inner wall surface 34, and the other end of the first inner wall surface 311 of the first plate 31 in the first direction Y is connected to a second inner wall surface 321 of the other second plate 32 via the other third inner wall surface 34.

For example, the shell 20 is provided with four third inner wall surfaces 34, and the four third inner wall surfaces 34 may be arranged at four corners of the shell 20. Correspondingly, the four third inner wall surfaces 34 define four first avoidance grooves 35.

The first avoidance groove 35 can avoid a first electrode plate 11 closest to one second plate 32 and a first electrode plate 11 closest to the other second plate 32, so that when the battery cell 6 is subject to impact along the thickness direction Z of the first plate, a risk of squeezing the first electrode plate 11 at the location in which the first plate 31 is intersected with the second plate 32 is reduced, the falling off of the active material is reduced, the capacity attenuation of the battery cell 6 slows down, and the reliability of the battery cell 6 is improved.

In some embodiments, the housing 30 includes the two first plates 31 and the two second plates 32. The housing 30 has openings at two ends along the second direction X. The shell 20 includes two end caps 40, and the two end caps 40 respectively cover the two openings of the housing 30.

In some embodiments, the first avoidance groove 35 runs through the housing 30 along the second direction X. For example, the size of the first avoidance groove 35 along the second direction X is equal to a size of the first plate 31 along the second direction X.

In some embodiments, the third inner wall surface 34 further defines a third avoidance groove 39 that is communicated with the first avoidance groove 35, and in the thickness direction of the second plate, the third avoidance groove 39 is concave relative to the second inner wall surface 321 and towards a side away from the electrode assemblies 10. In the thickness direction of the second plate, a part of a projection of the electrode assemblies 10 on the second plate 32 overlaps the third avoidance groove 39. For example, the thickness direction of the second plate is parallel to the first direction Y.

The third inner wall surface 34 defines both the first avoidance groove 35 and the third avoidance groove 39.

The second datum plane S2 can be used to define a boundary of the third avoidance groove 39. An opening of the third avoidance groove 39 is located on the second datum plane S2.

The first avoidance groove 35 and the third avoidance groove 39 can be directly communicated, or can alternatively be indirectly communicated through other spaces.

In the embodiments of the present application, when the battery cell 6 is subject to impact along the thickness direction of the second plate, the third avoidance groove 39 can reduce a risk of squeezing the first electrode plate 11 at the location in which the first plate 31 is intersected with the second plate 32, reduce the falling off of the active material, slow down the capacity attenuation of the battery cell 6, and improve the reliability of the battery cell 6.

In some embodiments, in the thickness direction Z of the first plate, the third avoidance groove 39 is located on one side that is of the plane on which the first inner wall surface 311 is located and that faces the electrode assemblies 10.

For example, in the thickness direction Z of the first plate, the third avoidance groove 39 may be spaced apart from the first datum plane S1 by a specific distance, or may alternatively extend to the first datum plane S1.

In some embodiments, the third inner wall surface 34 further includes a fifth surface 343, and the fifth surface 343 and at least a part of the first area 3411 define the third avoidance groove 39.

In some embodiments, the first area 3411 includes a first sub-area 3411a and a second sub-area 3411b, the first sub-area 3411a and the fifth surface 343 define the third avoidance groove 39, and the second sub-area 3411b connects the first sub-area 3411a and the second area 3412. For example, the intersection line of the first datum plane S1 and the first surface 341 is a boundary line between the second sub-area 3411b and the second area 3412, and an intersection line between the second datum plane S2 and the first surface 341 is a boundary line between the first sub-area 3411a and the second sub-area 3411b. Alternatively, in some embodiments, the fifth surface 343 and the first area 3411 as a whole define the third avoidance groove 39, in other words, the second sub-area 3411b can be omitted.

In some embodiments, the fifth surface 343 includes a fifth area 3431 and a sixth area 3432, the fifth area 3431 is parallel to the second inner wall surface 321 and connected to the first surface 341, and the sixth area 3432 connects the fifth area 3431 and the second inner wall surface 321.

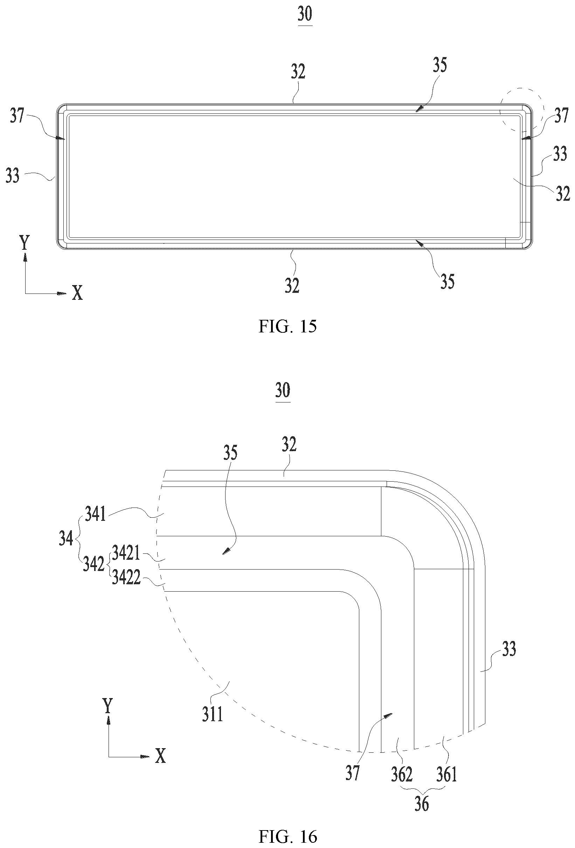

FIG. 15 is a top-down schematic diagram of a housing of a battery cell provided in some other embodiments of the present application. FIG. 16 is an enlarged schematic diagram of a circle in FIG. 15.

As shown in FIG. 15 and FIG. 16, in some embodiments, the two ends of the first avoidance groove 35 are respectively communicated with the two second avoidance grooves 37.

For example, the shell 20 is provided with an annular groove surrounding a circumference of the first inner wall surface 311, and the annular groove includes two first avoidance grooves 35.

In the embodiments of the present application, the first avoidance groove 35 is communicated with the second avoidance grooves 37. This can simplify a structure of a mold and improve molding efficiency.

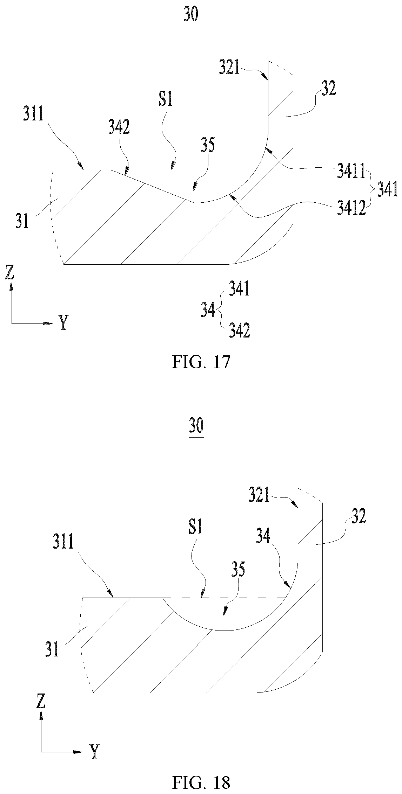

FIG. 17 is a partial cross-sectional view of a housing of a battery cell provided in some other embodiments of the present application.

As shown in FIG. 17, in some embodiments, the third inner wall surface 34 includes the first surface 341 and the second surface 342, the first surface 341 is an arc surface and is connected to the second inner wall surface 321, and the second surface 342 connects the first surface 341 and the first inner wall surface 311. At least the part of the first surface 341 and the second surface 342 define the first avoidance groove 35.

The second surface 342 can be an inclining surface that inclines relative to the first inner wall surface 311.

FIG. 18 is a partial cross-sectional view of a housing of a battery cell provided in some other embodiments of the present application.

In some embodiments, the third inner wall surface 34 includes a circular arc surface, and a central angle of the circular arc surface is greater than 90°. The circular arc surface can directly define the first avoidance groove 35.

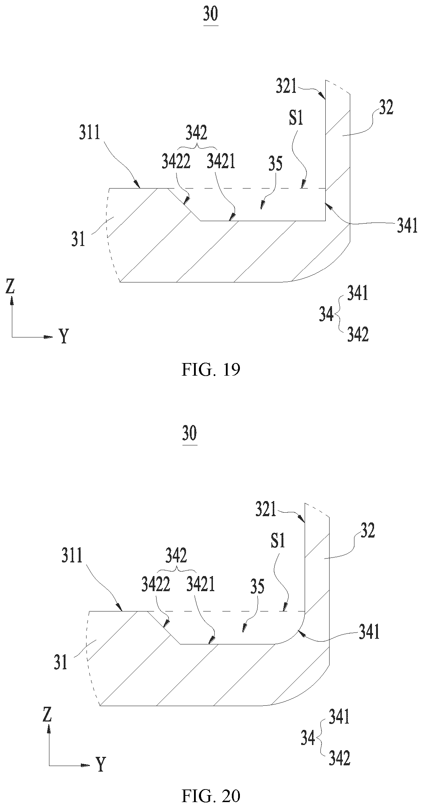

FIG. 19 is a partial cross-sectional view of a housing of a battery cell provided in some other embodiments of the present application.

As shown in FIG. 19, in some embodiments, the third inner wall surface 34 includes the first surface 341 and the second surface 342, the first surface 341 is an arc surface and is connected to the second inner wall surface 321, and the second surface 342 connects the first surface 341 and the first inner wall surface 311. The first surface 341 and the second surface 342 define the first avoidance groove 35.

In some embodiments, the first surface 341 is a planar surface, and the first surface 341 and the second inner wall surface 321 are on a same plane.

An intersection line of the first datum plane S1 and the second datum plane S2 can be used as a boundary line between the first surface 341 and the second inner wall surface 321.

FIG. 20 is a partial cross-sectional view of a housing of a battery cell provided in some other embodiments of the present application.

As shown in FIG. 20, in some embodiments, the third inner wall surface 34 includes the first surface 341 and the second surface 342, the first surface 341 is an arc surface and is connected to the second inner wall surface 321, and the second surface 342 connects the first surface 341 and the first inner wall surface 311. The first surface 341 and the second surface 342 define the first avoidance groove 35. The first surface 341 is an arc surface. The second surface 342 can be completely hidden in the first avoidance groove 35.

The intersection line of the first datum plane S1 and the second datum plane S2 can be used as the boundary line between the first surface 341 and the second inner wall surface 321.

According to some embodiments of the present application, the present application further provides a battery including a plurality of battery cells according to any one of the above embodiments.

According to some embodiments of the present application, the present application further provides an electrical device, including the battery in any of the above embodiments, and the battery is used to provide electrical energy for the electrical device. The electrical device may be any one of devices or systems above to which a battery cell is applied.

Refer to FIG. 4 to FIG. 8. An embodiment of the present application provides the battery cell 6, and the battery cell 6 includes the shell 20 and the electrode assemblies 10 accommodated in the shell 20.

The shell 20 includes the housing 30 and the end cap 40, the housing 30 has the opening, and the end cap 40 covers the opening of the housing 30. The housing 30 includes the first plate 31, the two second plates 32 that are arranged opposite to each other along the first direction Y, and the two third plates 33 that are arranged opposite to each other along the second direction X, the first plate 31 is opposite to the opening of the housing 30, the two second plates 32 are respectively connected to the two ends of the first plate 31 along the second direction X, the two third plates 33 are respectively connected to the two ends of the first plate 31 along the first direction Y, and the first direction Y, the second direction X, and the thickness direction Z of the first plate are perpendicular to each other in pairs. Two ends of each second plate 32 are respectively connected to the two third plates 33. For example, the first plate 31, the second plate 32, and the third plate 33 are perpendicular to each other.

The electrode assembly 10 is of a winding structure and includes the straight area 14 and the two bending areas 15, and the two bending areas 15 are respectively connected to the two ends of the straight area 14 along the second direction X.

The first plate 31 includes the first inner wall surface 311 facing the electrode assemblies 10, and the second plate 32 includes the second inner wall surface 321 facing the electrode assemblies 10. The shell 20 includes the third inner wall surface 34 connecting the first inner wall surface 311 and the second inner wall surface 321, at least the part of the third inner wall surface 34 defines the first avoidance groove 35, in the thickness direction Z of the first plate, the first avoidance groove 35 is concave relative to the first inner wall surface 311 and towards the side away from the electrode assemblies 10, and a part of a projection of the straight area 14 on the first plate 31 overlaps the first avoidance groove 35.

Along the second direction X, the two ends of the first avoidance groove 35 are both beyond the straight area 14, and the two ends of the first avoidance groove 35 are respectively spaced apart from the corresponding third plates 33 by a specific distance.

The third plate 33 further includes the fourth inner wall surface 331 facing the electrode assemblies 10. The shell 20 further includes the fifth inner wall surface 36 connecting the first inner wall surface 311 and the fourth inner wall surface 331, at least the part of the fifth inner wall surface 36 defines the second avoidance groove 37, and in the thickness direction Z of the first plate, the second avoidance groove 37 is concave relative to the first inner wall surface 311 and towards the side away from the electrode assemblies 10. In the thickness direction Z of the first plate, at least the part of the projection of the bending area 15 on the first plate 31 overlaps the second avoidance groove 37. Along the first direction Y, two ends of the second avoidance groove 37 are respectively spaced apart from the corresponding second plates 32 by a specific distance.

In the circumferential direction of the housing 30, the two first avoidance grooves 35 and the two second avoidance grooves 37 are alternately arranged, and the first avoidance grooves 35 and the second avoidance grooves 37 are spaced apart from each other.

It needs to be noted that to the extent that no conflict occurs, the embodiments of the present application and the features in the embodiments may be combined with each other.

Finally, it is hereby noted that the foregoing embodiments are merely intended to describe the technical solutions of the present application but not to limit the present application. Although the present application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the spirit and scope of the technical solutions of the embodiments of the present application.

## Claims

1. A battery cell, comprising a shell and an electrode assembly accommodated in the shell, wherein:
the shell comprises a first plate and a second plate, the second plate is intersected with the first plate for arrangement, the first plate comprises a first inner wall surface facing the electrode assembly, and the second plate comprises a second inner wall surface facing the electrode assembly;
the shell comprises a third inner wall surface connecting the first inner wall surface and the second inner wall surface, at least a part of the third inner wall surface defines a first avoidance groove, in a thickness direction of the first plate, the first avoidance groove is concave relative to the first inner wall surface and towards a side away from the electrode assembly, and a part of a projection of the electrode assembly on the first plate overlaps the first avoidance groove.

2. The battery cell according to claim 1, wherein the first inner wall surface is configured to support the electrode assembly.

3. The battery cell according to claim 1 or 2, wherein the electrode assembly comprises a first electrode plate and a second electrode plate with opposite polarities, the first electrode plate and the second electrode plate both comprise a straight layer facing the second plate for arrangement, a plurality of the straight layers are stacked along a first direction for arrangement, and two ends of the first avoidance groove along a second direction are both beyond the straight layers; and
the thickness direction of the first plate, the first direction, and the second direction are perpendicular to each other, and the first direction is parallel to a thickness direction of the second plate.

4. The battery cell according to claim 3, wherein:
the shell further comprises a third plate, and the third plate is located on a side of the electrode assembly along the second direction and is connected to the first plate and the second plate; and
in the second direction, the first avoidance groove is spaced apart from the third plate.

5. The battery cell according to claim 3 or 4, wherein the first electrode plate and the second electrode plate are wound for arrangement, the electrode assembly comprises a straight area and a bending area, the bending area is connected to an end portion of the straight area along the second direction, and the plurality of straight layers are located in the straight area.

6. The battery cell according to claim 5, wherein:
the shell further comprises a third plate, the third plate located on the side of the electrode assembly along the second direction and connected to the first plate and the second plate;
the third plate further comprises a fourth inner wall surface facing the electrode assembly; the shell further comprises a fifth inner wall surface connecting the first inner wall surface and the fourth inner wall surface, at least a part of the fifth inner wall surface defines a second avoidance groove, and in the thickness direction of the first plate, the second avoidance groove is concave relative to the first inner wall surface and towards the side away from the electrode assembly; and
in the thickness direction of the first plate, at least a part of a projection of the bending area on the first plate overlaps the second avoidance groove.

7. The battery cell according to claim 6, wherein the shell comprises two second plates arranged opposite to each other along the first direction and two third plates arranged opposite to each other along the second direction; and a second inner wall surface of each second plate is connected to the first inner wall surface through at least one third inner wall surface, and a fourth inner wall surface of each third plate is connected to the first inner wall surface through at least one fifth inner wall surface.

8. The battery cell according to claim 6 or 7, wherein the second avoidance groove is spaced apart from the second plate along the first direction.

9. The battery cell according to claim 6 or 7, wherein the two ends of the first avoidance groove are respectively communicated with two second avoidance grooves.

10. The battery cell according to any one of claims 6 to 9, wherein a plurality of electrode assemblies are provided, and the plurality of electrode assemblies are stacked along the first direction for arrangement; and in the thickness direction of the first plate, a projection of a bending area of each electrode assembly on the first plate overlaps the second avoidance groove.

11. The battery cell according to any one of claims 6 to 8, wherein a plurality of electrode assemblies are provided, and the plurality of electrode assemblies are stacked along the first direction for arrangement;
a plurality of fifth inner wall surfaces spaced apart from each other along the first direction each connect the first inner wall surface and the fourth inner wall surface, and the plurality of fifth inner wall surfaces define a plurality of second avoidance grooves; and in the thickness direction of the first plate, each of the second avoidance grooves at least overlaps a projection of a bending area of one electrode assembly on the first plate.

12. The battery cell according to claim 3 or 4, wherein the electrode assembly comprises a plurality of first electrode plates, the plurality of first electrode plates are stacked along the first direction for arrangement, and each first electrode plate comprises a straight layer;
the shell comprises two first plates arranged opposite to each other along the thickness direction of the first plate and two second plates arranged opposite to each other along the first direction, and the first plates and the second plates are alternately arranged along a circumferential direction of the shell; and
two ends of a first inner wall surface of each first plate in the first direction are respectively connected to second inner wall surfaces of the two second plates via two third inner wall surfaces.

13. The battery cell according to any one of claims 1 to 12, wherein the third inner wall surface further defines a third avoidance groove that is communicated with the first avoidance groove, and in the thickness direction of the second plate, the third avoidance groove is concave relative to the second inner wall surface and towards a side away from the electrode assembly; and in the thickness direction of the second plate, a part of a projection of the electrode assembly on the second plate overlaps the third avoidance groove.

14. The battery cell according to any one of claims 1 to 13, wherein the third inner wall surface comprises a first surface and a second surface, the first surface is an arc surface and is connected to the second inner wall surface, and the second surface connects the first surface and the first inner wall surface; and
at least a part of the first surface and the second surface define the first avoidance groove.

15. The battery cell according to claim 14, wherein the first surface comprises a first area and a second area, the first area protrudes, in the thickness direction of the first plate, from a side of the first inner wall surface facing the electrode assembly, and is connected to the second inner wall surface, the second area connects the first area and the second surface, and the second area and the second surface define the first avoidance groove.

16. The battery cell according to claim 14 or 15, wherein the first surface is a circular arc surface, two ends of the first surface are respectively tangent to the second inner wall surface and the second surface, and a radius of the first surface is R; in the thickness direction of the first plate, a size of an area of the first surface located in the first avoidance groove is d, where 0.1R ≤ d ≤ R; and optionally, 0.3R ≤ d ≤ 0.9R.

17. The battery cell according to any one of claims 14 to 16, wherein the second surface comprises a third area and a fourth area that are intersected with each other for arrangement, the third area is connected to the first surface and parallel to the first inner wall surface, and the fourth area connects the third area and the first inner wall surface.

18. The battery cell according to any one of claims 1 to 17, wherein in the thickness direction of the second plate, a maximum size, w, of the first avoidance groove is from 1 mm to 10 mm; and optionally, w is from 3 mm to 8 mm.

19. The battery cell according to any one of claims 1 to 18, wherein a maximum hardness of a part of the shell corresponding to the first avoidance groove along the thickness direction of the first plate is greater than a maximum hardness of a part of the first plate corresponding to the first inner wall surface.

20. The battery cell according to claim 1, wherein the third inner wall surface is located on a side of a plane, on which the second inner wall surface is located, close to the first inner wall surface.

21. The battery cell according to any one of claims 1 to 20, wherein the shell comprises a housing and an end cap, the housing has an opening, and the end cap covers the opening; and the housing comprises the first plate and the second plate.

22. A battery, comprising a plurality of battery cells according to any one of claims 1 to 21.

23. An electrical device, comprising the battery according to claim 22, wherein the battery is configured to provide electrical energy.
